(19) Europäisches Patentamt
European Patent Office
Office européen des brevets

(11) **EP 3 933 569 B1**

(12) **EUROPÄISCHE PATENTSCHRIFT**

(45) Veröffentlichungstag und Bekanntmachung des Hinweises auf die Patenterteilung:
**27.08.2025   Patentblatt 2025/35**

(21) Anmeldenummer: **20183454.6**

(22) Anmeldetag: **01.07.2020**

(51) Internationale Patentklassifikation (IPC):
**G06F 3/14** (2006.01)      **G09G 3/32** (2016.01)

(52) Gemeinsame Patentklassifikation (CPC):
**G06F 3/1446; G09G 3/32;** G09G 2300/026;
G09G 2310/0232; G09G 2320/0233

(54) **ANZEIGEVORRICHTUNG, PANEEL UND STEUERUNGSVERFAHREN HIEFÜR**

DISPLAY DEVICE, PANEL AND CONTROL METHOD FOR SAME

DISPOSITIF D'AFFICHAGE, PANNEAU ET PROCÉDÉ DE COMMANDE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.01.2022   Patentblatt 2022/01**

(73) Patentinhaber: **KAMARA Werbe und Kommunikations GmbH**
**1040 Wien (AT)**

(72) Erfinder:
• **SWATEK, Alexander**
**7540 Güssing (AT)**

• **STÖGER, Elmar**
**2822 Bad Erlach (AT)**
• **KIRSCHNER, Markus**
**2340 Mödling (AT)**
• **SCHUH, Bernhard**
**1230 Wien (AT)**

(74) Vertreter: **Weiser Voith Gugler Patentanwälte Partnerschaft Kopfgasse 7 1130 Wien (AT)**

(56) Entgegenhaltungen:
EP-A1- 3 675 094        WO-A1-2013/051063
WO-A1-2019/066594       CN-B- 102 842 285
US-A1- 2016 093 244

**Beschreibung**

Die vorliegende Erfindung betrifft eine Anzeigevorrichtung mit zumindest einem ersten und einem zweiten Paneel, die jeweils in Zeilen und Spalten angeordnete Leuchtelemente aufweisen und unter Bildung eines zu den Spalten parallel verlaufenden Spalts miteinander ausrichtbar sind, und zumindest einem Verbindungselement zur Halterung der Paneele in ihrer ausgerichteten Stellung. Des Weiteren betrifft die Erfindung ein Paneel, insbesondere für eine derartige Anzeigevorrichtung, sowie ein Verfahren zur Steuerung einer solchen Anzeigevorrichtung.

Modulare Anzeigevorrichtungen dieser Art werden dazu verwendet, eine gemeinsame ebene oder gekrümmte Bildfläche aus mehreren ausgerichteten Paneelen zu bilden und mittels deren Leuchtelemente ("Pixel") Bild- oder Videosignale wiederzugeben. Als Leuchtelemente werden häufig Leuchtdioden (LEDs), beispielsweise aus organischen Materialien (OLEDs), verwendet. Aufgrund der Modularität ergibt sich ein breites Anwendungsspektrum von großen stationären Videowänden in Stadien oder an Gebäuden über mobile, vor Ort temporär aufgebaute Großbildschirme für Veranstaltungen bis hin zu faltbaren Fernseh-, Computer- oder Handybildschirmen, die im gefalteten Zustand platzsparend verstaut werden können, wie beispielsweise in den Schriften EP 2 443 621 B1, EP 2 568 464 B1 oder AT 515 846 B1 offenbart.

Bei all diesen Anwendungen können Spalte zwischen den Paneelen die Bildqualität wesentlich beeinträchtigen, wenn die Spaltbreite und deren Variation entlang des Spalts ungleichmäßige Leuchtelementabstände und daher für das menschliche Auge wahrnehmbare, störende Unregelmäßigkeiten in der Bildhelligkeit verursachen. Beispielsweise erscheinen Spalte, welche einen regelmäßigen Leuchtelementabstand unter- bzw. überschreiten, dem Betrachter heller bzw. dunkler als der Rest der Bildfläche.

Die Einstellung und Aufrechterhaltung des richtigen, d.h. einen regelmäßigen Leuchtelementabstand über die Paneelgrenzen hinweg gewährleistenden Spalts zwischen zwei Paneelen ist jedoch aufgrund von Bauteiletoleranzen, Bauteilealterung, thermischer Ausdehnung und Wind in der Praxis schwierig. Eine gewisse Mindestspaltbreite ist häufig auch nicht nur zur Aufnahme von Bauteiletoleranzen und thermischer Ausdehnung erforderlich, sondern auch um ein Aneinanderanschlagen der Leuchtelemente am Spalt bei Erschütterungen oder Wind zu verhindern, welches zu einer Beschädigung der spaltnahen Leuchtelemente führen kann. Speziell bei hochauflösenden Anzeigevorrichtungen mit Leuchtelementabständen im Submillimeterbereich ist die Spaltbreite auch oftmals nicht im selben Ausmaß reduzierbar, sei es wegen produktionsbedingter Bauteiletoleranzen oder notwendiger Mindest-Gehäusewandstärken der Leuchtelemente, so dass hier übermäßige Spalte gleichsam konstruktionsbedingt sind.

Bei mobilen Anzeigevorrichtungen für den Veranstaltungsbereich, die häufig auf- und abgebaut werden, ergeben sich mit jedem Neuaufbau wieder andere Spaltbreiten zwischen den Paneelen, z.B. bei deren Zusammenstecken oder Verschrauben. Insbesondere bei faltbaren Anzeigevorrichtungen, z.B. für den Heimkinobereich oder für tragbare elektrische Geräte, stellt sich ebenfalls bei jedem Ausfalten bereits aufgrund notwendiger Lagerspiele stets eine leicht veränderte Spaltbreite ein. Aufgrund von Alterungserscheinungen wie einem Ausleiern oder Ausschlagen der Lager des Faltmechanismus kann sich dieser Effekt über die Zeit noch verstärken.

Aus den Schriften WO 2019/066594 A1 und CN 102842285 B sind Vorrichtungen bekannt, welche Sensoren zum Vermessen der Spaltbreite haben, und die spaltnächsten Leuchtelemente bei zu großen und damit dunkler erscheinenden bzw. zu kleinen und damit heller erscheinenden Spalten heller bzw. dunkler steuern, um deren Sichtbarkeit zu vermindern. Bei großen Spaltbreiten führt dies zum schädigenden Übersteuern spaltnaher Leuchtelemente.

Aus der Schrift US 2016/0093244 A1 ist ein modulares Display bekannt, dessen Leuchtelemente auf jedem Modul von der Mitte zu Nachbarmodulen hin zunehmende Helligkeiten aufweisen, um die Sichtbarkeit breiter Spalten zwischen benachbarten Modulen zu vermindern.

Die Erfindung setzt sich zum Ziel, Anzeigevorrichtungen, Paneele und Steuerungsverfahren hiefür zu schaffen, welche die genannten Nachteile des bekannten Standes der Technik überwinden und dazu beitragen, die Sichtbarkeit von konstruktionsbedingten oder im Betrieb auftretenden Spalten zwischen den Paneelen zu verringern.

Dieses Ziel wird in einem ersten Aspekt der Erfindung mit einer Anzeigevorrichtung gemäß den beigefügten Ansprüchen erreicht.

Es versteht sich, dass die hier betrachteten Paneele sowohl nebeneinander als auch untereinander liegen können, wobei im ersten Fall die Zeilen horizontal und im zweiten Fall vertikal, d.h. in beiden Fällen normal zum Spalt, verlaufen.

Die erfindungsgemäße Anzeigevorrichtung verwendet einen psycho-optischen Effekt ("optische Täuschung"), um die Sichtbarkeit der Spalte zwischen den Paneelen dynamisch zu korrigieren: Auf Basis einer individuellen Messung der Spaltbreite zwischen zwei Paneelen mittels der Messeinrichtung skaliert der Treiber das von den Leuchtelementen wiederzugebende Bild- oder Videosignal so, dass der physisch vorhandene Spalt zwischen den beiden Paneelen vom Betrachter weniger wahrgenommen wird. Beispielsweise ist der Treiber dazu ausgebildet, wenn die Spaltbreite den durchschnittlichen Leuchtelementabstand übersteigt, d.h. bei einem zu großen Spalt, die Helligkeit spaltnaher Leuchtelemente zu erhöhen, um den andernfalls dunkler erscheinenden Spalt für das menschliche Auge nicht mehr als dunkel wahrnehmbar zu machen. Dazu multipliziert der Treiber z.B. das Videosignal für das oder die spaltnächste(n) Leuchtelement(e) einer Zeile mit einem Faktor größer als Eins, z.B. um bei pulsweitenmodulierten Leuchtelementen die Pulsdauern zu verlängern oder bei spannungsgesteuerten Leuchtelementen deren angelegte Spannung zu erhöhen, oder der Treiber verringert bei einem zu kleinen Spalt die Helligkeit des bzw. der spaltnahen Leuchtelemente(s), um den andernfalls heller erscheinenden Spalt für den Betrachter weniger in Erscheinung treten zu lassen.

Allgemein gesprochen ist der Treiber dazu ausgebildet, in der genannten Zeile die Helligkeit zumindest eines spaltnäheren Leuchtelements relativ zur Helligkeit zumindest eines spaltferneren Leuchtelements zu erhöhen, wenn die ermittelte Spaltbreite größer als ein durchschnittlicher Abstand der Leuchtelemente in dieser Zeile ist, und zu vermindern, wenn die ermittelte Spaltbreite kleiner als der durchschnittlicher Abstand der Leuchtelemente in dieser Zeile ist. Die zur Wahrnehmungskompensation zu großer Spalte erforderliche Helligkeitserhöhung der spaltnahen Leuchtelemente kann somit auf dreifache Art erreicht werden: durch Erhöhung der Helligkeit der spaltnahen Leuchtelemente, durch Verminderung der Helligkeit der spaltfernen Leuchtelemente, oder durch beides; und dies alles vice versa zur Wahrnehmungskompensation zu kleiner Spalte. Durch entsprechende Auswahl unter diesen Optionen kann insbesondere auch eine Übersteuerung der Leuchtelemente verhindert werden, wie später noch ausführlicher beschrieben.

Die erfindungsgemäße Spaltkompensation eignet sich für alle Arten von aus Paneelen zusammengesetzten Anzeigevorrichtungen. Die Verbindungselemente zwischen den Paneelen können demgemäß starr oder gelenkig, lösbar oder unlösbar sein. In einer ersten Ausführungsform der Erfindung ist das Verbindungselement zur Halterung und Ausrichtung zweier Paneele z.B. ein gemeinsamer Träger, auf dem die Paneele montiert sind, oder eine oder mehrere Laschen, Klebe-, Niet- oder Schweißnähte, über welche die Paneelen untereinander verbunden sind.

Besonders vorteilhaft ist die vorliegende Erfindung für Anzeigevorrichtungen mit beweglichen und/oder lösbar kuppelbaren Paneelen, z.B. falt- oder steckbaren Paneelen. In einer besonders bevorzugten zweiten Ausführungsform der Erfindung ist das Verbindungselement daher ein Gelenk, über welches die Paneele zwischen der ausgerichteten Stellung und einer Faltstellung verschwenkbar sind. Beispielsweise kann die Anzeigevorrichtung leporelloartig zusammengefaltet werden, d.h. die Paneele mittels der Gelenke zick-zack-förmig aufeinandergeklappt werden, wie in den Schriften EP 2 443 621 B1, EP 2 568 464 B1 und AT 515846 B1 beschrieben.

In einer weiteren besonders bevorzugten dritten Ausführungsform der Erfindung ist das Verbindungselement eine Kupplung, über welche die Paneele lösbar verbunden sind. Die Kupplung kann beispielsweise eine Steck- oder Schraubkupplung direkt zwischen den Paneelen sein, oder ein gemeinsamer Träger, mit dem die Paneele lösbar kuppelbar sind. Bei transportablen Anzeigevorrichtungen für den Veranstaltungsbereich können so die Paneele einfach voneinander gelöst, einzeln platzsparend zwischengelagert und transportiert und dann für den Wiederaufbau zusammengekuppelt werden.

Die Messeinrichtung kann einmal nach jeder (Neu-)Ausrichtung der Paneele die aktuelle(n) Spaltbreite(n) ermitteln, auf deren Grundlage der Treiber die Leuchtelemente zur Reduktion der Spaltsichtbarkeit steuert. Um auch im laufenden Betrieb zeitliche Änderungen der Spaltbreite, z.B. durch Wärmedehnung, Bauteilealterung und -verformung, Witterungseinflüsse usw. zu kompensieren, ist es besonders vorteilhaft, wenn die Messeinrichtung dazu ausgebildet ist, während des Betriebs der Anzeigevorrichtung die genannte Spaltbreite fortlaufend zu ermitteln. "Fortlaufend" bedeutet in diesem Zusammenhang, dass die Messeinrichtung die Spaltbreite kontinuierlich oder in - bevorzugt regelmäßigen - Zeitabständen, z.B. jede Sekunde, Minute, Stunde usw., für eine oder mehrere Zeilen ermittelt. Der Treiber steuert die Leuchtelemente dann jeweils anhand der aktuell ermittelten Spaltbreite, also gleichsam "dynamisch" entsprechend der Relativlage und Relativbewegung der Paneele, um die beschriebene Reduktion der Spaltsichtbarkeit zu erreichen.

Im einfachsten Fall kann die Messeinrichtung nur einen Sensor aufweisen, der eine einzige, einheitliche Spaltbreite für alle Zeilen der Anzeigevorrichtung ermittelt. Bevorzugt weist die Messeinrichtung jedoch zumindest zwei in Längserstreckungsrichtung des Spalts voneinander beabstandete Sensoren auf, von denen der erste eine erste Breite des Spalts auf Höhe des ersten Sensors misst, und der zweite eine zweite Breite des Spalts auf Höhe des zweiten Sensors misst, wobei die Messeinrichtung dazu ausgebildet ist, die Spaltbreite auf Höhe der genannten Zeile anhand der gemessenen ersten und zweiten Breiten zu ermitteln. Damit kann ein sich über die Längserstreckung des Spalts erweiternder oder verjüngender Spalt, z.B. zwischen winkelmäßig fehlausgerichteten Paneelen, vermessen werden. Aus den Messwerten der beiden Sensoren kann die Messeinrichtung dann durch entsprechende Interpolation oder Extrapolation die jeweilige Spaltbreite auch für jede zwischen den oder außerhalb der beiden Sensoren liegende Zeile ermitteln.

Jeder Sensor kann entweder zur Gänze auf dem einen oder zur Gänze auf dem anderen Paneel angeordnet sein, um die Spaltbreite auf seiner Höhe zu messen, oder aus zwei einander beidseits des Spalts gegenüberliegenden, auf die Paneele verteilten Sensorteilen bestehen, die zwischeneinander die Spaltbreite messen. Im Fall von zur Gänze auf dem einen oder dem anderen Paneel liegenden Sensoren könnte bei Verwendung von zwei Sensoren der eine Sensor auf dem ersten Paneel und der andere Sensor auf dem zweiten Paneel angeordnet sein, um die Anzahl an notwendigen Sensoren pro Paneel zu reduzieren.

Um über eine lineare Spaltbreitenveränderung hinaus auch beliebige Verläufe der Spaltbreite ermitteln zu können, kann die Messeinrichtung in weiteren bevorzugten Ausführungsformen auch drei oder mehr Sensoren aufweisen und die von diesen Sensoren gemessenen Spaltbreiten für eine entsprechende Kurveninter- bzw. -extrapolation verwenden, um die Spaltbreite auf Höhe jeder Zeile zu bestimmen.

In einer ersten Variante der Erfindung kann jedes Paneel der Anzeigevorrichtung mit einer eigenen Messeinrichtung und einem eigenen Treiber ausgestattet sein und autark, jeweils für sich, die genannte Helligkeitssteuerung seiner Leuchtelemente zur Wahrnehmungskompensation des Spalts vornehmen. Die Helligkeitssteuerung kann dabei entweder einseitig erfolgen, wobei jedem Paneel ein eigener, nur mittels dessen Leuchtelemente wahrnehmungskompensierter Spalt zugeordnet ist, z.B. jeweils der Spalt zur Linken des Paneels, oder beidseitig, wobei einem Spalt mehrere Paneele zugeordnet sind, mittels deren Leuchtelemente der Spalt wahrnehmungskompensiert wird. In einer alternativen zweiten Variante der Erfindung können sich jeweils zwei benachbarte Paneele eine Messeinrichtung teilen, d.h. die Messeinrichtung des ersten Paneels ist dazu ausgebildet, auch für zumindest eine Zeile des zweiten Paneels eine Breite des Spalts auf Höhe dieser Zeile zu ermitteln, und der genannte Treiber des ersten Paneels - oder ein entsprechender weiterer Treiber des zweiten Paneels - ist dazu ausgebildet, zumindest ein Leuchtelement dieser Zeile des zweiten Paneels abhängig von der dafür ermittelten Spaltbreite zu steuern. Dadurch kann die Anzahl an Komponenten reduziert werden. Überdies kann bei Steuerung der Leuchtelemente beider Paneele, d.h. beidseits des Spalts, die zur Vermeidung einer Übersteuerung der spaltnahen Leuchtelemente bei zu großen Spalten benötigte Helligkeitsreserve ("headroom") halbiert und somit umgekehrt der zur Wiedergabe der Videosignals nutzbare Aussteuerbereich aller Leuchtelemente erhöht werden.

Die Leuchtelemente eines Paneels können abhängig von der Breite nur eines einzigen Spalts gesteuert sein, insbesondere die spaltnahen Leuchtelemente und/oder bei einem Paneel am Rand der Anzeigevorrichtung, das nur ein Nachbarpaneel hat. Bei Paneelen mit mehr als einem Nachbarpaneel, d.h. wenn die Anzeigevorrichtung zumindest ein "drittes" Paneel aufweist, welches unter Bildung eines weiteren Spalts mit dem ersten Paneel ausrichtbar ist, kann die Messeinrichtung optional auch dazu ausgebildet sein, eine Breite dieses weiteren Spalts zu ermitteln, und der Treiber dazu ausgebildet sein, das genannte Leuchtelement auch abhängig von der ermittelten Breite des weiteren Spalts zu steuern. Dieser weitere Spalt kann dabei entweder parallel zu den Zeilen oder parallel zu den Spalten des ersten Paneels verlaufen, d.h. das erste, zweite und dritte Paneel können linear nebeneinander oder L-förmig ("über Eck") angeordnet sein. Das Steuern der Leuchtelemente des mittleren Paneels einer solchen Dreiergruppe abhängig von beiden Spaltbreiten ermöglicht es, gleichzeitig sowohl die Sichtbarkeit beider Spalte zu reduzieren als auch die Helligkeit der Leuchtelemente für die Wiedergabe des Bild- oder Videosignals zu maximieren. Beispielsweise könnte die Helligkeitsreserve, die für die Helligkeitserhöhung spaltnaher Leuchtelemente bei zu großen Spalten zu deren Sichtbarkeitsreduktion erforderlich ist, auf Basis der größten aller ermittelten Spaltbreiten bestimmt werden, um gleichzeitig eine Reduktion der Spaltsichtbarkeit, eine maximale Helligkeit zur Videosignalwiedergabe und eine Verhinderung des Übersteuerns spaltnaher Leuchtelemente zu erreichen.

Die Anzeigevorrichtung kann noch weitere, mit dem ersten Paneel ausrichtbare Paneele aufweisen, z.B. ein viertes, fünftes usw., wobei die Sichtbarkeit aller sich dadurch ausbildenden weiteren Spalte durch Ermittlung der jeweiligen Spaltbreiten und Steuern der Leuchtelemente anhand der ermittelten Spaltbreiten reduziert werden kann.

In einem zweiten Aspekt schafft die Erfindung ein Paneel, insbesondere für die oben beschriebene Anzeigevorrichtung, welches in Zeilen und Spalten angeordnete Leuchtelemente aufweist und unter Bildung eines zu den Spalten parallel verlaufenden Spalts mit zumindest einem zweiten Paneel ausrichtbar ist, mit einer Messeinrichtung, die dazu ausgebildet ist, für jede Zeile des Paneels eine Breite des Spalts auf Höhe dieser Zeile zu ermitteln, und mit einem ein anzuzeigendes Signal empfangenden und mit der Messeinrichtung und allen Leuchtelementen verbundenen Treiber, welcher dazu ausgebildet ist, die Leuchtelemente abhängig von dem Signal zu steuern,

welches Paneel sich gemäß der Erfindung dadurch auszeichnet, dass der Treiber dazu ausgebildet ist, in jeder Zeile, wenn die ermittelte Spaltbreite größer als ein durchschnittlicher Abstand der Leuchtelemente in dieser Zeile ist, die Helligkeit zumindest eines spaltnäheren Leuchtelements relativ zur Helligkeit zumindest eines spaltferneren Leuchtelements durch Skalieren des Signals so zu erhöhen, dass das spaltnächste Leuchtelement auf Höhe der größten Spaltbreite bei einem maximalen, im Signal für dieses Leuchtelement codierten Helligkeitswert maximal ausgesteuert ist und alle übrigen Leuchtelemente demgegenüber geringer.

Das Paneel der Erfindung ermöglicht eine strikte Modularisierung der Anzeigevorrichtung. Eine Vielzahl von gleichartigen Paneelen kann so bausteinartig zusammengesetzt werden. Dadurch können unterschiedlichste Anzeigevorrichtungen kostengünstig aus denselben standardisierten Modulen, nämlich Paneelen und jeweils zugehörigen Verbindungselementen, Messeinrichtungen, Sensoren und Treibern, aufgebaut werden, was Produktion, Lagerhaltung, Vertrieb und Montage wesentlich vereinfacht.

In einer besonders bevorzugten Ausführungsform des Paneels weist die Messeinrichtung zumindest einen Sensor auf, der in eine dem Spalt zugewandte Umfangsseite des Paneels integriert ist. Die Integration des Sensors in die Umfangsseite des Paneels ermöglicht besonders kleine Spaltbreiten. Darüber hinaus schützt die Integration den Sensor vor Beschädigungen bei Lagerung und Transport der Paneele und beim Falten, Zusammenstecken oder Montieren der Anzeigevorrichtung.

Hinsichtlich weiterer bevorzugter Ausgestaltungen und Vorteile des erfindungsgemäßen Paneels wird auf die obigen Ausführungen zur erfindungemäßen Anzeigevorrichtung verwiesen.

In einem dritten Aspekt schafft die Erfindung auch ein Verfahren zum Steuern einer Anzeigevorrichtung mit zumindest einem ersten und einem zweiten Paneel, die jeweils in Zeilen und Spalten angeordnete Leuchtelemente aufweisen und unter Bildung eines zu den Spalten parallel verlaufenden Spalts miteinander ausrichtbar sind, welches sich erfindungsgemäß auszeichnet durch:

Ermitteln, für jede Zeile des ersten und des zweiten Paneels, einer Breite des Spalts auf Höhe dieser Zeile; und Steuern zumindest eines Leuchtelements jeder Zeile abhängig sowohl von einem anzuzeigenden Signal als auch von der für diese Zeile ermittelten Spaltbreite, wobei im Schritt des Steuerns in jeder Zeile, wenn die ermittelte Spaltbreite größer als ein durchschnittlicher Abstand der Leuchtelemente in dieser Zeile ist, die Helligkeit zumindest eines spaltnäheren Leuchtelements relativ zur Helligkeit zumindest eines spaltferneren Leuchtelements durch durch Skalieren des Signals so erhöht wird, dass die spaltnächsten Leuchtelemente auf Höhe der größten Spaltbreite bei einem maximalen, im Signal für diese Leuchtelemente codierten Helligkeitswert maximal ausgesteuert sind und alle übrigen Leuchtelemente demgegenüber geringer.

Hinsichtlich der Vorteile und bevorzugter Ausgestaltungen des erfindungsgemäßen Verfahrens wird wiederum auf die obigen Ausführungen zur erfindungemäßen Anzeigevorrichtung verwiesen.

Die Erfindung wird nachstehend anhand von in den beigeschlossenen Zeichnungen dargestellten Ausführungsbeispielen näher erläutert. In den Zeichnungen zeigt:

Fig. 1 eine Anzeigevorrichtung gemäß der Erfindung mit fünf erfindungsgemäßen Paneelen in ausgerichteter Stellung in einer Vorderansicht;
Fig. 2 die Anzeigevorrichtung von Fig. 1 in einer Faltstellung in der Draufsicht;
Fig. 3 das Prinzip der Helligkeitssteuerung spaltnaher Leuchtelemente zweier Paneele der Anzeigevorrichtung von Fig. 1 in schematischer Darstellung;
Fig. 4 ein Blockschaltbild der Anzeigevorrichtung von Fig. 1; und
die Fig. 5 bis 7 weitere Ausführungsformen der Anzeigevorrichtung der Erfindung in Form von ausschnittsweisen Blockschaltbildern.

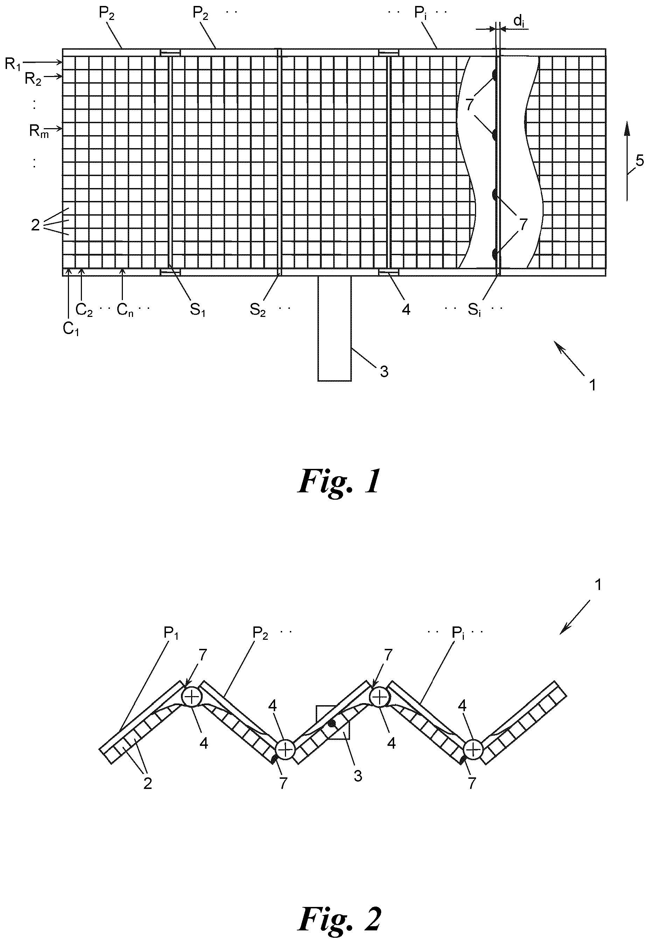

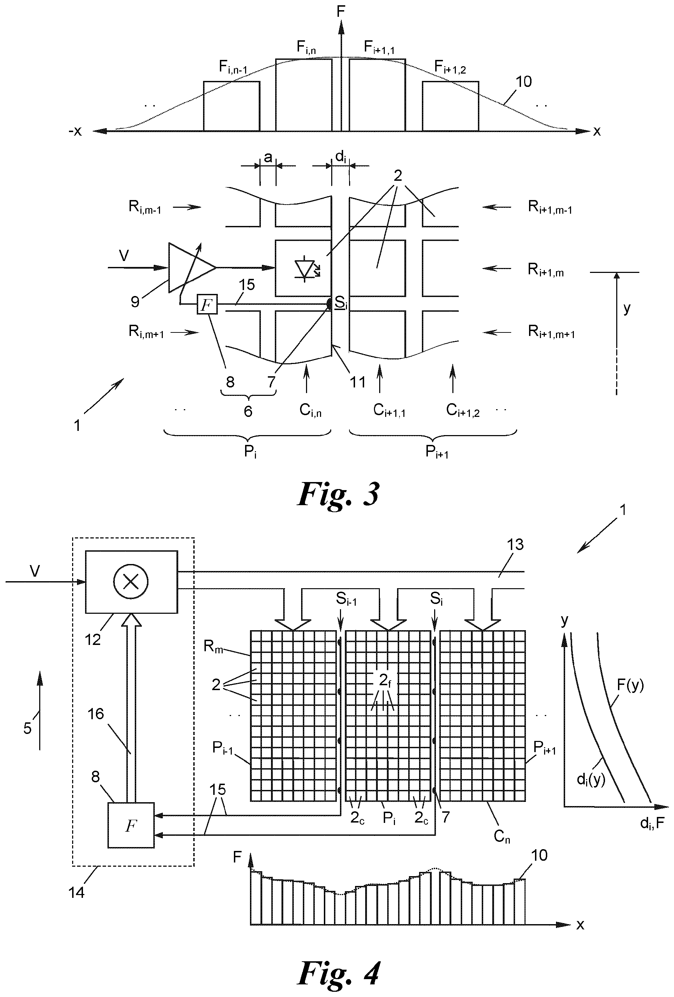

Gemäß Fig. 1 ist eine modulare Anzeigevorrichtung 1 aus mehreren (hier: fünf) Paneelen $P_i$ (i = 1, 2, ...) zusammengesetzt. Jedes Paneel $P_i$ ist wiederum aus einzelnen, in Zeilen $R_m$ (m = 1, 2, ...) und Spalten $C_n$ (n = 1, 2, ...) angeordneten Leuchtelementen 2 zusammengesetzt. Die Paneele $P_i$ bilden in der in Fig. 1 gezeigten Stellung, in der sie miteinander ausgerichtet sind, gemeinsam eine (hier in der Zeichnungsebene liegende) Bildfläche, auf welcher während des Betriebs der Anzeigevorrichtung 1 mittels der Leuchtelemente 2 Bild- und/oder Videosignale V (Fig. 3 - 7) wiedergegeben werden können. Die von den ausgerichteten Paneelen $P_i$ gebildete Bildfläche kann sowohl eben als auch gekrümmt sein, z.B. mit konvex gekrümmten Paneelen $P_i$ für elektronische Litfasssäulen oder Public Viewing Displays oder mit konkav gekrümmten Paneelen $P_i$, die rund um einen Betrachter angeordnet sind.

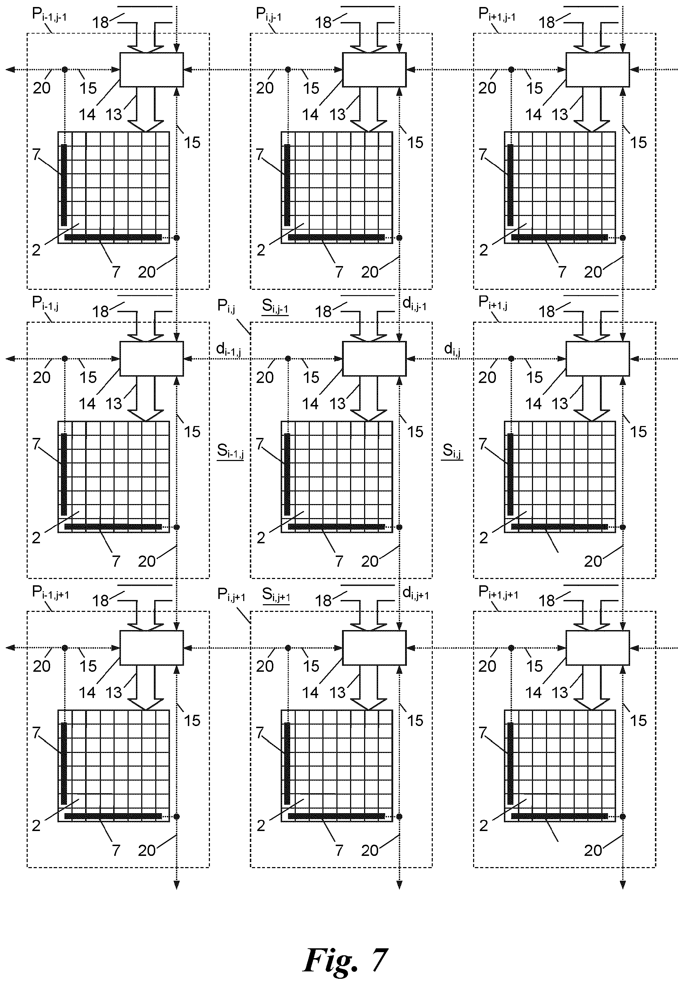

Die Anzeigevorrichtung 1 kann grundsätzlich eine beliebige Anzahl von Paneelen $P_i$ haben, die in einer (Fig. 1 - 6) oder zwei Richtungen (Fig. 7) nebeneinander angeordnet sind. Die Anzeigevorrichtung 1 kann beliebig groß sein, beispielsweise eine Videowand in einem Stadion, eine Werbe- oder Informationstafel ("digital signage") im öffentlichen Raum, ein transportabler Großbildschirm für Konzerte, Veranstaltungen usw., ein stationärer Großbildschirm für den Outdoor-, Indoor- oder Heimkinobereich usw., bis hin zu einem kleinen Computer- oder Handybildschirm.

Jedes Leuchtelement 2 repräsentiert ein Pixel der Bildfläche und gibt ein Pixel des Bild- bzw. Videosignals V wieder. Die Leuchtelemente 2 können dazu Leuchtdioden (LEDs) aufweisen, beispielsweise aus organischem Material (OLEDs) oder aus anorganischem Material, z.B. diskrete LEDs, oberflächenmontierte LEDs (SMD-LEDs), "Chip on Board"-LEDs (COB-LEDs), Mikro-LEDs etc. Jedes Leuchtelement $P_i$ kann aus einer einzigen Leuchtdiode aufgebaut sein, z.B. um monochrome Bild- oder Videosignale V wiederzugeben, oder aus zwei oder mehr Subleuchtelementen, beispielsweise aus einer roten, einer grünen und einer blauen Leuchtdiode, um farbige Bild- oder Videosignale V wiederzugeben.

In dem in den Fig. 1 und 2 gezeigten Beispiel bildet die Anzeigevorrichtung 1 einen faltbaren Großbildschirm, der auf einem Fuß 3 drehbar gelagert ist. Die Paneele $P_i$ sind dazu jeweils paarweise über Verbindungselemente 4 in Form von Gelenken so aneinander angelenkt, dass sie zick-zack-förmig bzw. leporelloartig aufeinandergefaltet werden können; Fig. 2 zeigt eine Zwischenstellung während des Leporello-Faltens.

Alternativ könnten die Verbindungselemente 4 auch starr sein, sowohl unlösbar als auch lösbar. In einem Fall könnten die Verbindungselemente 4 beispielsweise durch einen gemeinsamen (oder mehrere einzelne) Träger gebildet sein, z.B. eine gemeinsame Grundplatte oder einzelne Verbindungslaschen, auf oder an dem/der/denen die Paneele $P_i$ fest oder lösbar montiert sind. In einem anderen Fall könnten die Verbindungselemente 4 Kupplungen sein, z.B. Dreh-, Schraub- oder Steckkupplungen, über welche die Paneele $P_i$ lösbar miteinander kuppelbar sind.

Wie eingangs erläutert, verbleiben aufgrund von Bauteiletoleranzen, Bauteilealterung, Wärmedehnung, Witterungseinflüssen und notwendiger Lagerspiele zu den Spalten $C_n$ im wesentlichen parallele Spalte $S_i$ zwischen den Paneelen $P_i$, jeweils mit einer Spaltbreite $d_i$, die sogar in Längserstreckungsrichtung 5 bzw. y-Richtung (Fig. 3, 4) des Spalts $S_i$ variieren kann. Fig. 3 zeigt einen Ausschnitt der Anzeigevorrichtung 1 in der Nähe eines Spaltes $S_i$ zwischen einem ersten Paneel $P_i$ und einem zweiten Paneel $P_{i+1}$. Wenn die Spaltbreite $d_i$ größer als der durchschnittliche gegenseitige Abstand a der Leuchtelemente 2 in einer Zeile $R_m$ ist, insbesondere für viele oder alle Zeilen $R_m$, ist der Spalt $S_i$ für einen Betrachter als dunkler Streifen in der Bildfläche wahrnehmbar, im umgekehrten Fall als heller Streifen.

Die Fig. 3 und 4 zeigen das Prinzip der optischen Wahrnehmungskompensation solcher Spalte $S_i$ in der Anzeigevorrichtung 1. Dazu verfügt die Anzeigevorrichtung 1 über eine Messeinrichtung 6 zur Vermessung der Spalte $S_i$ im Betrieb. Wie in Fig. 3 für eine beispielhafte Zeile $R_m$ des ersten Paneels $P_i$ gezeigt, ermittelt die Messeinrichtung 6 mit Hilfe eines Sensors 7 und einer daran angeschlossenen Auswerteeinheit 8 die Spaltbreite $d_i$ auf Höhe y dieser Zeile $R_m$, d.h. $d_{i,m} = d_i(y)$, und steuert damit einen Treiber 9 für zumindest ein Leuchtelement 2 der Zeile $R_m$, insbesondere das spaltnächste Leuchtelement 2 der Zeile $R_m$, an. Der Treiber 9 empfängt das von diesem Leuchtelement 2 anzuzeigende Bild- bzw. Videosignal V und skaliert es abhängig von der von der Messeinrichtung 6 erhaltenen Spaltbreite $d_{i,m}$ so, dass der Spalt $S_i$ neben diesem Leuchtelement 2 für den Betrachter weniger stark wahrnehmbar ist, im Idealfall "unsichtbar" wird.

Ist beispielsweise die ermittelte Spaltbreite $d_{i,m}$ größer als der durchschnittliche Leuchtelementabstand a, erhöht der Treiber 9 die aktuelle, dem Signal V entsprechende Helligkeit des oder der spaltnächsten Leuchtelements/e 2 der Zeile $R_m$, ist sie kleiner, vermindert der Treiber 9 diese Helligkeit. Dafür kann der Treiber 9 das bzw. die Leuchtelement/e 2 auf jede dem Fachmann bekannte Art steuern, beispielsweise durch Spannungspegelsteuerung, steuerbare Vorwiderstände oder Pulsweitenmodulation. Die Skalierung (Erhöhung, Verminderung) der dem Signal V entsprechenden aktuellen Helligkeit des/der Leuchtelements/e 2 kann dabei z.B. multiplikativ erfolgen, d.h. der Treiber 9 multipliziert den im Signal V kodierten Helligkeitswert für das jeweilige Leuchtelement 2 mit einem spaltbreitenabhängigen Skalierungsfaktor F, oder additiv, d.h. der Treiber 9 addiert oder subtrahiert von dem Signal V einen spaltbreitenabhängigen Wert.

Die Anzeigevorrichtung 1 kann eine individuelle Messeinrichtung 6 und/oder einen individuellen Treiber 9 für jedes Leuchtelement 2, nur für die spaltnahen Leuchtelemente 2 oder insbesondere nur für die spaltnächsten, d.h. am Rand eines Paneels $P_i$ liegenden, Leuchtelemente 2 haben. In der Regel genügt jedoch eine Messeinrichtung 6 pro Spalt $S_i$, und der Treiber 9 kann auch ein gemeinsamer Spaltentreiber für alle Leuchtelemente 2 einer Spalte $C_n$ sein, der deren jeweils anzuzeigende Signale V mit einem gemeinsamen Faktor F skaliert.

Wie in dem oberen Diagramm von Fig. 3 gezeigt, können dabei auch unterschiedliche Skalierungsfaktoren ..., $F_{i,n-1}$, $F_{i,n}$, $F_{i,n+1}$, $F_{in}$, ... für die dem Spalt $S_i$ benachbarten Spalten ..., $C_{i,n-1}$, $C_{i,n}$, $C_{i,1}$, $C_{i,2}$, ... von Leuchtelementen 2 der dem Spalt $S_i$ bildenden Paneele $P_i$, $P_{i+1}$ verwendet werden, wobei spaltnähere Spalten $C_{i,n}$, $C_{i+1,1}$ stärker skaliert werden als spaltfernere Spalten $C_{i,n-1}$, $C_{i+1,2}$, so dass sich gleichsam ein Skalierungsverlauf 10 in Richtung der Zeilen $R_m$ ergibt, siehe auch unteres Diagramm in Fig. 4. Der Skalierungsverlauf 10 kann einer vorgewählten Funktion folgen, z.B. abhängig von der Spaltbreite $d_{i,m}$, dem Leuchtelementabstand a und dem Absolutabstand $x_s$ zum Spalt $S_i$. Beispielsweise kann für den Skalierungsverlauf 10 eine der folgenden Funktionen $F(x_s, a, d_{i,m})$ gewählt werden:

$$F(x_s, a, d_{i,m}) = 1 + (\alpha - \beta \frac{d_{i,m} \cdot x_s}{a}) \cdot \Theta(x_c - x_s) \qquad (1)$$

oder

$$F(x_s, a, d_{i,m}) = 1 + (\alpha - \beta \frac{d_{i,m} \cdot x_s}{a} - \gamma \frac{d_{i,m}^2 \cdot x_s^2}{a^2}) \cdot \Theta(x_c - x_s) \qquad (2)$$

oder

$$F(x_s, a, d_{i,m}) = 1 + \alpha \frac{d_{i,m}}{a} e^{-(x_s / \lambda)^2} \qquad (3)$$

wobei $x_c$ ein Cutoff-Abstand, $\Theta$ die Heaviside-Sprungfunktion und $\alpha$, $\beta$, $\gamma$ und $\lambda$ Anpassungskoeffizienten sind.

Der Sensor 7 kann jeder im Stand der Technik bekannte Abstandssensor sein, z.B. ein Ultraschall-Sensor, ein kapazitiver Sensor, ein induktiver Sensor, ein optischer Sensor, ein mechanischer Sensor, beispielsweise ein Drucksensor, usw. Der Sensor 7 kann zwischen den den Spalt $S_i$ begrenzenden Paneelen $P_i$ oder zur Gänze auf dem einen oder dem anderen Paneel $P_i$ angeordnet sein oder auf diese beiden Paneele $P_i$ verteilte Sensorkomponenten haben, die zwischeneinander die Spaltbreite $d_i$ bzw. $d_i(y)$ oder $d_{i,m}$ messen. Optional ist der Sensor 7, wie in Fig. 3 gezeigt, in die den Spalt $S_i$ begrenzende Umfangsseite 11 eines Paneels $P_i$ integriert.

Allgemein gibt es drei Varianten zur Wahrnehmungskompensation eines "zu großen" ($d_{i,m} > a$) Spalts $S_i$ auf Höhe einer Zeile $R_m$: Entweder wird die Helligkeit zumindest eines spaltnäheren, z.B. einer fixen Anzahl an spaltnächsten, Leuchtelements/en 2 relativ zu den übrigen Leuchtelementen 2 der Zeile $R_m$ erhöht, oder es wird die Helligkeit zumindest eines spaltferneren, z.B. aller übrigen Leuchtelemente 2 der Zeile $R_m$, relativ zu dem oder den spaltnächsten Leuchtelementen 2 der Zeile $R_m$ verringert, oder es wird beides gemacht, d.h. die Helligkeiten der spaltnäheren und der spaltferneren Leuchtelemente 2 relativ zueinander gesteuert. Bei Kompensation eines "zu kleinen" ($d_{i,m} < a$) Spalts $S_i$ gilt dies vice versa.

Um insbesondere bei der Wahrnehmungskompensation zu großer Spalte ein Übersteuern der spaltnächsten Leuchtelemente 2 zu vermeiden, kann vorweg das Bild- bzw. Videosignal V reduziert werden, um eine Helligkeitsreserve ("headroom") für die spaltbreitenabhängige zusätzliche Helligkeit der spaltnächsten Leuchtelemente 2 zu schaffen. Wenn die Anzeigevorrichtung 1 mehrere Spalte $S_i$ hat, wird das Videosignal V insbesondere so skaliert, dass die der größten Spaltbreite $d_{i,m}$ aller Zeilen $R_m$ benachbarten Leuchtelemente 2 nicht übersteuert werden.

Die bzw. jede Messeinrichtung 6 kann für einen Spalt $S_i$ nur einen einzigen Sensor 7 aufweisen, der eine einheitliche Spaltbreite $d_i$ für den Spalt $S_i$ misst (Fig. 3). Wenn die bzw. jede Messeinrichtung 6 mehr als einen Sensor 7 pro Spalt $S_i$ hat, können damit auch Spalte $S_i$ mit in Längserstreckungsrichtung 5 (y-Richtung) veränderlicher Breite $d_i(y)$ gemessen werden, z.B. mit zwei Sensoren 7 eine sich in Längserstreckungsrichtung 5 linear erweiternde oder verjüngende Spaltbreite $d_i(y)$. Im Falle von zwei oder mehr Sensoren 7 pro Spalt $S_i$ können diese diskret, d.h. separat, oder auf einem gemeinsamen Messstreifen angeordnet sein, gegebenenfalls auch als ein einziger kontinuierlicher Messstreifen, der den Verlauf der Spaltbreite $d_i(y)$ in hoher Auflösung misst.

Fig. 4 zeigt eine Messeinrichtung 6 mit mehreren (hier: vier) Sensoren 7 pro Spalt $S_i$ und eine diesen allen gemeinsame Auswerteeinheit 8, die einen die einzelnen Leuchtelement-Treiber 9 enthaltenden Display-Treiber 12 steuert, welcher das spaltenabhängig skalierte Bild- bzw. Videosignal V über einen Bus 13 den Paneelen $P_i$ zuführt. Auswerteeinheit 8 und Display-Treiber 12 können beispielsweise in einem Videoprozessor 14 als Hard- oder Softwarekomponenten implementiert sein. Jeder der vier in Abständen über die Längserstreckung des Spalts $S_i$ verteilten Sensoren 7 misst die Breite $d_i(y)$ auf seiner jeweiligen Höhe y und sendet sie über eine Leitung 15 an die Auswerteeinheit 8. Die Auswerteeinheit 8 ermittelt aus den gemessenen Spaltbreiten $d_i(y)$ für jede Zeile $R_m$ der an den Spalt $S_i$ angrenzenden Paneele $P_i$ eine zugehörige individuelle Spaltbreite $d_{i,m}$ und sendet diese über einen Bus 16 an den Display-Treiber 12.

Zum Beispiel kann die Auswerteeinheit 8 aus den bekannten Höhen y der vier Sensoren 7 und der von diesen gemessenen Spaltbreiten $d_i(y)$ die Variation der Spaltbreite $d_i$ entlang des Spalts $S_i$ mithilfe einer Fit-Funktion, wie eines Polynoms, Splines usw., approximieren und anhand dieser Funktion für jede Zeile $R_m$ aus der Höhe y der Zeile $R_m$ eine zugehörige Spaltbreite $d_{i,m}$ inter- oder extrapolieren.

Das rechte Diagramm von Fig. 4 zeigt beispielhaft einen von der Auswerteeinheit 8 ermittelten Verlauf $d_i(y)$ der Breite $d_i$ des Spalts $S_i$ zwischen den Paneelen $P_i$ und $P_{i+1}$ und den von dieser Spaltbreite $d_i(y)$ abhängigen, von dem bzw. den Treiber/n 9, 12 für die Skalierung des Signals V der spaltnächsten Leuchtelemente 2 verwendeten Skalierungsfaktor $F(y)$ bzw. $F_{m,i}$.

Im Beispiel von Fig. 4 weisen die spaltnächsten Leuchtelemente 2 der untersten Zeilen $R_m$ der Paneele $P_i$ und $P_{i+1}$ den größten Skalierungsfaktor F auf. Zur Vermeidung einer Übersteuerung dieser Leuchtelemente 2 skalieren die Treiber 9, 12 das Signal V so, dass diese beiden Leuchtelemente 2 bei einem maximalen, im Signal V für diese Leuchtelemente 2 codierten Helligkeitswert maximal ausgesteuert sind, d.h. ohne zu übersteuern, und alle übrigen Leuchtelemente 2 demgegenüber geringer.

Zur Wahrnehmungskompensation eines Spalts $S_i$ können grundsätzlich die Leuchtelemente 2 nur des einen den Spalt $S_i$ begrenzenden Paneels $P_i$, nur des anderen den Spalt $S_i$ begrenzenden Paneels $P_{i,1}$ oder beider Paneele $P_i$, $P_{i,1}$ spaltbreitenabhängig gesteuert werden.

Wenn ein Paneel $P_i$ mehr als ein Nachbarpaneel hat, wie das mittlere Paneel $P_i$ in Fig. 4, und damit mehr als einen Spalt $S_i$ zu seinen Nachbarpaneelen $P_{i-1}$, $P_{i+1}$ hat, können zumindest einige Leuchtelemente 2 dieses Paneels $P_i$ auch abhängig von den Spaltbreiten $d_i$ mehr als eines Spalts $S_i$ gesteuert werden. Dies wird insbesondere der Fall sein, wenn nicht bloß die spaltnäheren Leuchtelemente $2_c$ (nachbarspaltbreitenabhängig) helligkeitserhöht oder -vermindert werden, sondern stattdessen (oder zusätzlich) die spaltferneren Leuchtelemente $2_f$ relativ dazu helligkeitsvermindert oder -erhöht werden. In Fig. 4 vermindert z.B. der Treiber 12 - zur Kompensation des (hier: zu kleinen) linken Spalts $S_{i-1}$ - die Helligkeit der diesem Spalt $S_{i-1}$ nächsten Leuchtelemente $2_c$ und erhöht die Helligkeit der dem (hier: zu großen) rechten Spalt $S_i$ nahen Leuchtelemente $2_c$, d.h. spaltfernere Leuchtelemente $2_f$ werden hier abhängig von der Spaltbreite $d_i$ des jeweils breiteren der beiden Spalte $S_i$, $S_{i-1}$ gesteuert.

In einer weiteren optionalen Ausführungsform koppelt der Treiber 9, 12 überdies die Helligkeit der Leuchtelemente 2 aller Paneele $P_i$. Dazu bestimmt der Treiber 9, 12 die maximale Spaltbreite $d_{max}$ aller Spalte $S_i$ für alle Reihen $R_m$ und weist dem (entsprechend dem Signal V) helleren der beiden diese Spaltbreite $d_{max}$ begrenzenden Leuchtelemente 2 den maximalen Aussteuerbereich zu und allen übrigen Leuchtelementen 2 einen dazu relativen, von deren zugehöriger Spaltbreite $d_{i,m}$ abhängigen Aussteuerbereich für das Signal V.

In jeder der beschriebenen Ausführungsformen kann/können die Messeinrichtung/en 6 die Spaltbreite/n $d_i$, $d_i(y)$ bzw. $d_{i,m}$ wiederholt ermitteln, z.B. nach jeder Neuausrichtung der Paneele $P_i$, oder fortlaufend während des Betriebs der Anzeigevorrichtung 1, z.B. kontinuierlich oder in regelmäßigen Zeitabständen, z.B. jede Stunde, Minute, Sekunde usw., so dass der bzw. jeder Treiber 9, 12 das jeweilige Signal V für die Leuchtelemente 2 gleichsam dynamisch entsprechend der Relativlage und -bewegung der Paneele $P_i$ skaliert.

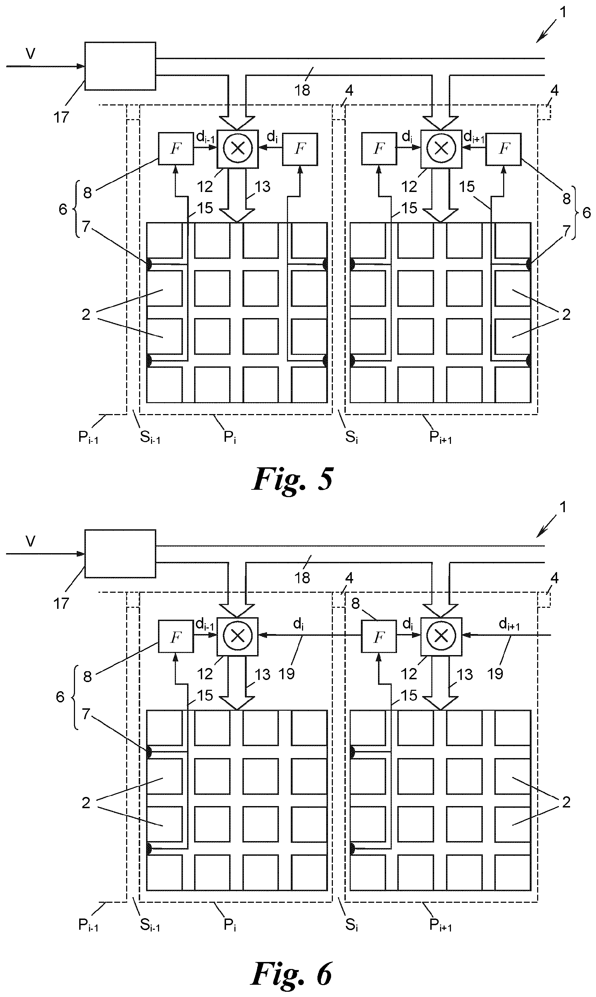

Fig. 5 zeigt eine stark modularisierte Ausführungsform der Anzeigevorrichtung 1 mit weitgehend autarken, gleichartigen Paneelen $P_i$, die über die Verbindungselemente 4 untereinander verbunden sind. Jedes Paneel $P_i$ hat einen zugehörigen Treiber 12 sowie eine aus Sensoren 7 und Auswerteeinheit 8 bestehende zugehörige Messeinrichtung 6. Den Treibern 12 wird der das jeweilige Paneel $P_i$ betreffende Ausschnitt des Bild- bzw. Videosignals V von einem Demultiplexer 17 über einen Bus 18 zugeführt. Die Sensoren 7 des Paneels $P_i$ messen die Spaltbreiten $d_{i-1}$, $d_i$ sowohl des linken Spalts $S_{i-1}$ zum Nachbarpaneel $P_{i-1}$ als auch des rechten Spalts $S_i$ zum Nachbarpaneel $P_{i+1}$, und die Auswerteeinheit 6 ermittelt für jede Zeile $R_m$ des Paneels $P_i$ eine zugehörige Spaltbreite $d_{i-1,m}$, $d_{i,m}$ und sendet diese an den Treiber 12 des Paneels $P_i$. Der Treiber 12 steuert wie in der oben beschriebenen Weise die Leuchtelemente 2 des Paneels $P_i$ durch Skalierung des Signals V, um die Spaltsichtbarkeit zu reduzieren.

Fig. 6 zeigt eine alternative vereinfachte Modularisierung der Anzeigevorrichtung 1 mit miteinander kommunizierenden Paneelen $P_i$. Zwei benachbarte Paneele $P_i$, $P_{i+1}$ teilen sich hier jeweils eine Messeinrichtung 6 zur Vermessung des zwischen ihnen liegenden Spalts $S_i$. Im gezeigten Beispiel sendet die Messeinrichtung 6 des Paneels $P_{i+1}$ die ermittelten Spaltbreiten $d_i$, $d_i(y)$ oder $d_{i,m}$ des Spalts $S_i$ über eine Leitung 19 an den Treiber 12 des Nachbarpaneels $P_{i-1}$, sodass auch dieser die Leuchtelemente 2 zur Wahrnehmungskompensation des Spalts $S_i$ entsprechend ansteuern kann.

In einer weiteren Ausführungsform der Anzeigevorrichtung von Fig. 6 könnte die Leitung 19 entfallen, und jeder Treiber 12 kompensiert nur jenen Spalt $S_{i-1}$, für den er eine Messeinrichtung 6 hat.

Fig. 7 zeigt eine weitere Ausführungsform der Anzeigevorrichtung 1 mit kommunizierenden Paneelen $P_{i,j}$, welche zweidimensional, d.h. nicht nur horizontal sondern auch vertikal nebeneinander angeordnet sind. Dabei messen die Sensoren 7 jedes Paneels $P_{i,j}$ z.B. die Breite $d_{i-1,j}$ des mit dem linken Nachbarpaneel $P_{i-1,j}$ gebildeten Spalts $S_i$ und die Breite $d_{i,j+1}$ des mit dem unteren Nachbarpaneel $P_{i,j+1}$ gebildeten Spalts $S_{i,j+1}$ (die y-und x-Abhängigkeiten bzw. Zeilen- und Spaltenindices m, n der Spaltbreiten $d_{i,j}$ werden hier der Einfachheit halber weggelassen, können aber wie zuvor beschrieben jeweils berücksichtigt werden). Die Paneele $P_{i,j}$ senden die von ihnen jeweils ermittelten Spaltbreiten $d_{i,j}$ über Leitungen 20 an das jeweilige Nachbarpaneel (hier: $P_{i,j}$, $P_{i,j+1}$), mit dem sie den jeweiligen Spalt bilden, so dass die Anzahl an Messeinrichtungen 6 bzw. Sensoren 7 minimiert werden kann.

In weiteren Ausführungsformen der Anzeigevorrichtung 1 können die Zeilen $R_m$ und/oder die Spalten $C_n$ benachbarter Paneele $P_{i-1,j}$, $P_{i,j}$ bzw. $P_{i,j+1}$, $P_{i,j}$ auch nicht exakt zeilen- bzw. spaltenmäßige aufeinander ausgerichtet sein (nicht gezeigt). Ferner ist es auch möglich, dass an eine Umfangsseite 11 eines Paneels $P_{i,j}$ auch zwei oder mehr Nachbarpaneele angrenzen. Zum Beispiel können an die Umfangsseite 11 des ersten Paneels $P_{i,j}$ zwei Paneele $P_{i+1,j}$ angrenzen, welche z.B. nur halb so hoch sind wie das erste Paneel $P_{i,j}$ und/oder welche die Umfangsseite 11 teilweise überragen. Generell brauchen die Paneele $P_{i,j}$ der Anzeigevorrichtung 1 nicht alle dieselbe Form oder Größe zu haben, sondern können auch unterschiedlich sein, beispielsweise in Form von Rechtecken unterschiedlicher Dimensionen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

**Patentansprüche**

1. Anzeigevorrichtung (1), mit

   einem ersten und einem zweiten Paneel ($P_i$, $P_{i+1}$), die jeweils in Zeilen ($R_m$) und Spalten ($C_n$) angeordnete Leuchtelemente (2) aufweisen, und die unter Bildung eines zu den Spalten ($C_n$) eines Paneels parallel verlaufenden Spalts ($S_i$) miteinander ausrichtbar sind,
   zumindest einem Verbindungselement (4) zur Halterung des ersten und des zweiten Paneels ($P_i$, $P_{i+1}$) in ihrer ausgerichteten Stellung,
   einer Messeinrichtung (6), die dazu ausgebildet ist, für jede Zeile ($R_m$) der Leuchtelemente (2) des ersten und des zweiten Paneels ($P_i$), eine Breite ($d_{i,m}$) des Spalts ($S_i$) zwischen dem ersten und dem zweiten Paneel auf Höhe (y) dieser Zeile ($R_m$) zu ermitteln, und
   einem ein anzuzeigendes Signal (V) empfangenden und mit der Messeinrichtung (6) und allen Leuchtelementen (2) des ersten und des zweiten Paneels ($P_i$) verbundenen Treiber (9, 12), welcher dazu ausgebildet ist, die Leuchtelemente (2) abhängig von dem Signal (V) und den ermittelten Spaltbreiten ($d_{i,m}$) zu steuern,
   **dadurch gekennzeichnet, dass** der Treiber (9, 12) dazu ausgebildet ist, in jeder Zeile ($R_m$),
   wenn die ermittelte Spaltbreite ($d_{i,m}$) größer als ein durchschnittlicher Abstand (a) der Leuchtelemente (2) in dieser Zeile ($R_m$) ist, die Helligkeit zumindest eines spaltnäheren Leuchtelements ($2_c$) des ersten und des zweiten

Paneels ($P_i$) relativ zur Helligkeit zumindest eines spaltferneren Leuchtelements ($2_f$) in dieser Zeile durch Skalieren zu erhöhen, wobei die spaltnächsten Leuchtelemente ($2_c$) auf Höhe der größten Spaltbreite ($d_{i,m}$) bei einem maximalen, im Signal (V) für diese Leuchtelemente ($2_c$) codierten Helligkeitswert maximal ausgesteuert sind und alle übrigen Leuchtelemente (2) demgegenüber geringer, und

die Helligkeit zumindest eines spaltnäheren Leuchtelements ($2_c$) relativ zur Helligkeit zumindest eines spaltferneren Leuchtelements ($2_f$) in dieser Zeile durch Skalieren zu vermindern, wenn die ermittelte Spaltbreite ($d_{i,m}$) kleiner als der durchschnittlicher Abstand (a) der Leuchtelemente (2) in dieser Zeile ($R_m$) ist.

2. Anzeigevorrichtung nach Anspruch 1, wobei das Verbindungselement (4) ein Gelenk ist, über welches die Paneele ($P_i$) zwischen der ausgerichteten Stellung und einer Faltstellung verschwenkbar sind.

3. Anzeigevorrichtung nach Anspruch 1, wobei das Verbindungselement (4) eine Kupplung ist, über welche die Paneele ($P_i$) lösbar verbunden sind.

4. Anzeigevorrichtung nach einem der Ansprüche 1 bis 3, wobei die Messeinrichtung (6) dazu ausgebildet ist, während des Betriebs der Anzeigevorrichtung (1) die genannte Spaltbreite ($d_{i,m}$) fortlaufend zu ermitteln.

5. Anzeigevorrichtung nach einem der Ansprüche 1 bis 4, wobei die Messeinrichtung (6) zumindest zwei in Längserstreckungsrichtung (5) des Spalts ($S_i$) voneinander beabstandete Sensoren (7) aufweist, von denen der erste Sensor (7) eine erste Breite ($d_i(y)$) des Spalts ($S_i$) auf Höhe (y) des ersten Sensors (7) misst, und der zweite Sensor (7) eine zweite Breite ($d_i(y)$) des Spalts ($S_i$) auf Höhe (y) des zweiten Sensors (7) misst, wobei die Messeinrichtung (6) dazu ausgebildet ist, die Spaltbreite ($d_{i,m}$) auf Höhe (y) jeder Zeile ($R_m$) anhand der gemessenen ersten und zweiten Breiten ($d_i$) zu ermitteln.

6. Anzeigevorrichtung nach einem der Ansprüche 1 bis 5, wobei die Anzeigevorrichtung (1) ein drittes Paneel ($P_{i-i}$) aufweist, welches unter Bildung eines weiteren Spalts ($S_{i-1}$) mit dem ersten Paneel ($P_i$) ausrichtbar ist, wobei die Messeinrichtung (6) dazu ausgebildet ist, auch eine Breite ($d_{i-1,m}$) des weiteren Spalts ($S_{i-1}$) zu ermitteln, und der Treiber (9, 12) dazu ausgebildet ist, die genannten Leuchtelemente (2) auch abhängig von der ermittelten Breite ($d_{i-1,m}$) des weiteren Spalts ($S_{i-1}$) zu steuern.

7. Paneel für eine Anzeigevorrichtung nach einem der Ansprüche 1 bis 6.

8. Verfahren zum Steuern einer Anzeigevorrichtung (1) nach einem der Ansprüche 1 bis 6, umfassend:

Ermitteln, für jede Zeile ($R_m$) der Leuchtelemente (2) des ersten und des zweiten Paneels ($P_i$), einer Breite ($d_{i,m}$) des Spalts ($S_i$) zwischen dem ersten und dem zweiten Paneel auf Höhe (y) dieser Zeile ($R_m$); und Steuern zumindest eines Leuchtelements (2) jeder Zeile ($R_m$) abhängig sowohl von einem anzuzeigenden Signal (V) als auch von der für diese Zeile ($R_m$) ermittelten Spaltbreite ($d_{i,m}$), wobei im Schritt des Steuerns in jeder Zeile ($R_m$), wenn die ermittelte Spaltbreite ($d_{i,m}$) größer als ein durchschnittlicher Abstand (a) der Leuchtelemente (2) in dieser Zeile ($R_m$) ist, die Helligkeit zumindest eines spaltnäheren Leuchtelements ($2_c$) des ersten und des zweiten Paneels ($P_i$) relativ zur Helligkeit zumindest eines spaltferneren Leuchtelements ($2_f$) in dieser Zeile durch Skalieren erhöht wird, wobei die spaltnächsten Leuchtelemente ($2_c$) auf Höhe der größten Spaltbreite ($d_{i,m}$) bei einem maximalen, im Signal (V) für diese Leuchtelemente ($2_c$) codierten Helligkeitswert maximal ausgesteuert sind und alle übrigen Leuchtelemente (2) demgegenüber geringer, und die Helligkeit zumindest eines spaltnäheren Leuchtelements ($2_c$) relativ zur Helligkeit zumindest eines spaltferneren Leuchtelements ($2_f$) in dieser Zeile durch Skalieren vermindert wird, wenn die ermittelte Spaltbreite ($d_{i,m}$) kleiner als der durchschnittlicher Abstand (a) der Leuchtelemente (2) in dieser Zeile ($R_m$) ist.

9. Verfahren nach Anspruch 8, wobei die Schritte des Ermittelns und Steuerns während des Betriebs der Anzeigevorrichtung (1) wiederholt ausgeführt werden.

10. Verfahren nach Anspruch 8 oder 9, wobei die Anzeigevorrichtung (1) ein drittes Paneel ($P_{i-1}$) aufweist, welches unter Bildung eines weiteren Spalts ($S_{i-1}$) mit dem ersten Paneel ($P_i$) ausrichtbar ist, wobei im Schritt des Ermittelns eine Breite ($d_{i-1,m}$) des weiteren Spalts ($S_{i-1}$) ermittelt wird, und im Schritt des Steuerns die genannten Leuchtelemente (2) auch abhängig von der ermittelten Breite ($d_{i-1,m}$) des weiteren Spalts ($S_i$) gesteuert werden.

**Claims**

1. A display device (1), comprising

   a first and a second panel ($P_i$, $P_{i+1}$), each of which comprises luminous elements (2) arranged in rows ($R_m$) and columns ($C_n$) and which can be aligned with one another to form a gap ($S_i$) running parallel to the columns ($C_n$) of a panel,
   at least one connecting element (4) for holding the first and second panels ($P_i$, $P_{i+1}$) in their aligned position,
   a measuring device (6) which is configured to determine, for each row ($R_m$) of the luminous elements (2) of the first and the second panel ($P_i$), a width ($d_{i,m}$) of the gap ($S_i$) between the first and the second panel at the level (y) of this row ($R_m$), and
   a driver (9, 12) which receives a signal (V) to be displayed and is connected to the measuring device (6) and all luminous elements (2) of the first and the second panel ($P_i$), which driver is configured to control the luminous elements (2) as a function of both the signal (V) and the determined gap widths ($d_{i,m}$),
   **characterized in that**, the driver (9, 12) is configured to, in each row ($R_m$),
   when the determined gap width ($d_{i,m}$) is greater than an average distance (a) between the luminous elements (2) in this row ($R_m$), increase, by scaling, the brightness of at least one luminous element ($2_c$) of the first and second panel ($P_i$), which is closer to the gap, relative to the brightness of at least one luminous element ($2_f$), which is further away from the gap in this row, wherein the luminous elements ($2_c$) closest to the gap at the level of the largest gap width ($d_{i,m}$) are maximally driven at a maximum brightness value coded in the signal (V) for these luminous elements ($2_c$) and all remaining luminous elements (2) less, compared thereto, and
   reduce, by scaling, the brightness of at least one luminous element ($2_c$), which is closer to the gap, relative to the brightness of at least one luminous element ($2_f$), which is further away from the gap in this row, when the determined gap width ($d_{i,m}$) is smaller than the average distance (a) of the luminous elements (2) in this row ($R_m$).

2. The display device according to claim 1, wherein the connecting element (4) is a joint, via which the panels ($P_i$) can be pivoted between the aligned position and a folded position.

3. The display device according to claim 1, wherein the connecting element (4) is a coupling via which the panels ($P_i$) are detachably connected.

4. The display device according to any one of claims 1 to 3, wherein the measuring device (6) is configured to continuously determine said gap width ($d_{i,m}$) during operation of the display device (1).

5. The display device according to any one of claims 1 to 4, wherein the measuring device (6) comprises at least two sensors (7) spaced from one another in the longitudinal extension direction (5) of the gap ($S_i$), the first sensor (7) of which measures a first width ($d_i(y)$) of the gap ($S_i$) at the level (y) of the first sensor (7), and the second sensor (7) of which measures a second width ($d_i(y)$) of the gap ($S_i$) at the level (y) of the second sensor (7), wherein the measuring device (6) is configured to determine the gap width ($d_{i,m}$) at the level (y) of each row ($R_m$) on the basis of the measured first and second widths ($d_i$).

6. The display device according to any one of claims 1 to 5, wherein the display device (1) comprises a third panel ($P_{i-i}$) which can be aligned with the first panel ($P_i$) to form a further gap ($S_{i-1}$), wherein the measuring device (6) is configured to also determine a width ($d_{i-1,m}$) of the further gap ($S_{i-1}$), and the driver (9, 12) is configured to control said luminous elements (2) also as a function of the determined width ($d_{i-1,m}$) of the further gap ($S_{i-1}$).

7. A panel for a display device according to any one of claims 1 to 6.

8. A method for controlling a display device (1) according to any one of claims 1 to 6, comprising:

   determining, for each row ($R_m$) of the luminous elements (2) of the first and the second panel ($P_i$), a width ($d_{i,m}$) of the gap ($S_i$) between the first and the second panel at the level (y) of this row ($R_m$); and
   controlling at least one luminous element (2) of each row ($R_m$) as a function of both a signal (V) to be displayed and the gap width ($d_{i,m}$) determined for said row ($R_m$),
   wherein in the step of controlling in each row ($R_m$), when the determined gap width ($d_{i,m}$) is greater than an average distance (a) of the luminous elements (2) in this row ($R_m$), the brightness of at least one luminous element ($2_c$) of the first and the second panel ($P_i$), which is closer to the gap, is increased by scaling relative to the brightness of at least one luminous element ($2_f$), which is further away from the gap in this row,

wherein the luminous elements ($2_c$) closest to the gap at the level of the largest gap width ($d_{i,m}$) are maximally driven at a maximum brightness value coded in the signal (V) for these luminous elements ($2_c$), and all remaining luminous elements (2) less, compared thereto, and

the brightness of at least one luminous element ($2_c$) closer to the gap is reduced by scaling relative to the brightness of at least one luminous element ($2_f$) further away from the gap in this row, when the determined gap width ($d_{i,m}$) is smaller than the average distance (a) of the luminous elements (2) in this row ($R_m$).

9. The method according to claim 8, wherein the steps of determining and controlling are carried out repeatedly during operation of the display device (1).

10. The method according to claim 8 or 9, wherein the display device (1) comprises a third panel ($P_{i-1}$) which can be aligned with the first panel ($P_i$) to form a further gap ($S_{i-1}$), wherein, in the step of determining, a width ($d_{i-1,m}$) of the further gap ($S_{i-1}$) is determined, and in the step of controlling, said luminous elements (2) are also controlled as a function of the determined width ($d_{i-1,m}$) of the further gap ($S_i$).

## Revendications

1. Dispositif d'affichage (1) avec

   un premier et un deuxième panneau ($P_i$, $P_{i+1}$), qui présentent respectivement des éléments lumineux (2) disposés en rangées ($R_m$) et en colonnes ($C_n$), et qui peuvent être alignés les uns avec les autres en formant une fente ($S_i$) s'étendant parallèlement aux colonnes ($C_n$) d'un panneau,
   au moins un élément de liaison (4) pour le maintien du premier et du deuxième panneau ($P_i$, $P_{i+1}$) dans leur position alignée,
   un dispositif de mesure (6) qui est conçu pour déterminer, pour chaque rangée ($R_m$) d'éléments lumineux (2) du premier et du deuxième panneau ($P_i$), une largeur ($d_{i,m}$) de la fente ($S_i$) entre le premier et le deuxième panneau à la hauteur (y) de cette rangée ($R_m$), et
   un pilote (9, 12) recevant un signal (V) à afficher et relié au dispositif de mesure (6) et à tous les éléments lumineux (2) du premier et du deuxième panneau ($P_i$), lequel est conçu pour commander les éléments lumineux (2) en fonction du signal (V) et des largeurs de fentes ($d_{i,m}$) déterminées,
   **caractérisé en ce que** le pilote (9, 12) est conçu pour, dans chaque rangée ($R_m$),
   lorsque la largeur de fente ($d_{i,m}$) déterminée est supérieure à une distance moyenne (a) des éléments lumineux (2) dans cette rangée ($R_m$), augmenter par redimensionnement la luminosité d'au moins un élément lumineux ($2_c$) plus proche de la fente du premier et du deuxième panneau ($P_i$) par rapport à la luminosité d'au moins un élément lumineux ($2_f$) plus éloigné de la fente dans cette rangée, où les éléments lumineux ($2_c$) les plus proches de la fente à la hauteur de la largeur de fente ($d_{i,m}$) la plus grande sont commandés au maximum à une valeur de luminosité maximale codée dans le signal (V) pour ces éléments lumineux ($2_c$) et tous les autres éléments lumineux (2), par contre, plus faiblement, et
   diminuer par redimensionnement la luminosité d'au moins un élément lumineux ($2_c$) plus proche de la fente par rapport à la luminosité d'au moins un élément lumineux ($2_f$) plus éloigné de la fente dans cette rangée lorsque la largeur de fente ($d_{i,m}$) déterminée est inférieure à la distance moyenne (a) des éléments lumineux (2) dans cette rangée ($R_m$).

2. Dispositif d'affichage selon la revendication 1, dans lequel l'élément de liaison (4) est joint par lequel les panneaux ($P_i$) sont pivotables entre la position alignée et une position pliée.

3. Dispositif d'affichage selon la revendication 1, dans lequel l'élément de liaison (4) est un accouplement par lequel les panneaux ($P_i$) sont reliés de manière amovible.

4. Dispositif d'affichage selon l'une des revendications 1 à 3, dans lequel le dispositif de mesure (6) est conçu pour déterminer en continu ladite largeur de fente ($d_{i,m}$) pendant le fonctionnement du dispositif d'affichage (1).

5. Dispositif d'affichage selon l'une des revendications 1 à 4, dans lequel le dispositif de mesure (6) présente au moins deux capteurs (7) espacés l'un de l'autre dans la direction de l'extension longitudinale (5) de la fente ($S_i$), parmi lesquels le premier capteur (7) mesure une première largeur ($d_i(y)$) de la fente ($S_i$) à la hauteur (y) du premier capteur (7) et le deuxième capteur (7) mesure une deuxième largeur ($d_i(y)$) de la fente ($S_i$) à la hauteur (y) du deuxième capteur (7), dans lequel le dispositif de mesure (6) est conçu pour déterminer la largeur de fente ($d_{i,m}$) à la hauteur (y) de

chaque rangée ($R_m$) à l'aide des premières et deuxièmes largeurs ($d_i$) mesurées.

6. Dispositif d'affichage selon l'une des revendications 1 à 5, dans lequel le dispositif d'affichage (1) présente un troisième panneau ($P_{i-i}$), qui peut être aligné avec le premier panneau ($P_i$) en formant une fente ($S_{i-1}$) supplémentaire dans lequel le dispositif de mesure (6) est conçu pour déterminer également une largeur ($d_{i-1,m}$) de la fente ($S_{i-1}$) supplémentaire, et le pilote (9, 12) est conçu pour commander également lesdits éléments lumineux (2) en fonction de la largeur ($d_{i-1,m}$) déterminée de la fente ($S_{i-1}$) supplémentaire.

7. Panneau pour un dispositif d'affichage selon l'une des revendications 1 à 6.

8. Procédé pour commander un dispositif d'affichage (1) selon l'une des revendications 1 à 6, comprenant :

la détermination, pour chaque rangée ($R_m$) d'éléments lumineux (2) du premier et du deuxième panneau ($P_i$), d'une largeur ($d_{i,m}$) de la fente ($S_i$) entre le premier et le deuxième panneau à la hauteur (y) de cette rangée ($R_m$) ;
et la commande d'au moins un élément lumineux (2) de chaque rangée ($R_m$) en fonction à la fois d'un signal (V) à afficher et de la largeur de fente ($d_{i,m}$) déterminée pour cette rangée ($R_m$) ;
dans lequel, dans l'étape de commande, dans chaque rangée ($R_m$), lorsque la largeur de fente ($d_{i,m}$) déterminée est supérieure à une distance moyenne (a) des éléments lumineux (2) dans cette rangée ($R_m$), la luminosité d'au moins un élément lumineux ($2_c$) plus proche de la fente du premier et du deuxième panneau ($P_i$) est augmentée par redimensionnement par rapport à la luminosité d'au moins un élément lumineux ($2_f$) plus éloigné de la fente dans cette rangée,
dans lequel les éléments lumineux ($2_c$) les plus proches de la fente à la hauteur de la largeur de fente ($d_{i,m}$) la plus grande sont commandés au maximum à une valeur de luminosité maximale codée dans le signal (V) pour ces éléments lumineux ($2_c$) et tous les autres éléments lumineux (2), par contre, plus faiblement,
et la luminosité d'au moins un élément lumineux ($2_c$) plus proche de la fente est diminuée par redimensionnement par rapport à la luminosité d'au moins un élément lumineux ($2_f$) plus éloigné de la fente dans cette rangée lorsque la largeur de fente ($d_{i,m}$) déterminée est inférieure à la distance moyenne (a) des éléments lumineux (2) dans cette rangée ($R_m$).

9. Procédé selon la revendication 8, dans lequel les étapes de détermination et de commande sont exécutées de manière répétée pendant le fonctionnement du dispositif d'affichage (1).

10. Procédé selon la revendication 8 ou 9, dans lequel le dispositif d'affichage (1) présente un troisième panneau ($P_{i-1}$), qui peut être aligné avec le premier panneau ($P_i$) en formant une fente ($S_{i-1}$) supplémentaire, dans lequel, dans l'étape de détermination, une largeur ($d_{i-1,m}$) de la fente ($S_{i-1}$) supplémentaire est déterminée, et dans l'étape de commande, lesdits éléments lumineux (2) sont commandés également en fonction de la largeur ($d_{i-1,m}$) déterminée de la fente ($S_{i-1}$) supplémentaire.

**Fig. 1**

**Fig. 2**

**Fig. 3**

**Fig. 4**

**Fig. 5**

**Fig. 6**

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2443621 B1
- EP 2568464 B1
- AT 515846 B1
- WO 2019066594 A1
- CN 102842285 B
- US 20160093244 A1